# EUROPÄISCHE PATENTSCHRIFT

(11) **EP 2 328 737 B1**
(45) Veröffentlichungstag und Bekanntmachung des Hinweises auf die Patenterteilung: **25.11.2015**
(21) Anmeldenummer: 09780264.9
(22) Anmeldetag: 07.07.2009
(51) Int. Cl.: B29C 47/38

(54) **EINSCHNECKENEXTRUDER**
SINGLE-SCREW EXTRUDER
EXTRUDEUSE À VIS UNIQUE

(30) Priorität: 20.08.2008 DE 102008038529
(43) Veröffentlichungstag der Anmeldung: 08.06.2011
(73) Patentinhaber: KraussMaffei Technologies GmbH, 80997 München (DE)
(72) Erfinder: SCHNEIDER, Florian, Johannes, 83346 Bergen (DE)
(74) Vertreter: Roider, Stephan
(86) Internationale Anmeldenummer: PCT/EP2009/058612
(87) Internationale Veröffentlichungsnummer: WO 2010/020467

(56) Entgegenhaltungen:
- DE-A1- 10 130 759
- JP-A- 2001 322 154
- US-A- 3 954 366
- US-A- 4 013 276
- US-A- 4 842 788
- US-A1- 2004 085 852
- US-A1- 2008 075 922

## Beschreibung

Die vorliegende Erfindung betrifft einen Einschneckenextruder mit einem Zylinder, der eine Aufschmelzzone und eine Homogenisierzone aufweist, die sich an die Aufschmelzzone anschließt, sowie eine in dem Zylinder drehbar gelagerte Schnecke, die im Bereich der Homogenisierzone über mindestens zwei aufeinander folgende Verfahrensteile verfügt, wovon das in Förderrichtung zweite als Scherteil ausgebildet ist, gemäß Anspruch 1.

Bei bekannten Einschneckenextrudern ist es eine ständige Aufgabe des Fachmanns, den Durchsatz des Einschneckenextruders zu erhöhen, bei gleichzeitiger Beibehaltung oder gar Verbesserung der Schmelzequalität.

Hierzu gibt es vielfältige Entwicklungen, die sich einerseits auf die Ausgestaltung der in dem Zylinder drehbar gelagerten Schnecke beziehen, so dass es zwischenzeitlich eine Vielzahl von verschiedenartigen Schneckentypen gibt, die in den verschiedenen Zonen des Extruders spezifisch ausgebildet sind. Beispiele hierfür sind Barriereschnecken oder Polygon-Schnecken mit zyklischen Gangquerschnittsänderungen. Zu den Polygon-Schnecken zählen ET- (Energy Transfer) und Wave-Schnecken, wie sie beispielsweise in der US 4,405,239 oder der US 4,015,832 und US 4,173,417 beschrieben sind.

Auch im Bereich der Kombination von Zylinder- und Schneckenkönfiguration wurden Entwicklungen getätigt. So ist es beispielsweise aus der DE 26 24 589 A1 oder der DE 199 28 870 C2 bekannt, bei einem Einschneckenextruder mit einer im Bereich der Aufschmelzzone als Barriereschnecke ausgebildeten Schnecke den Zylinder mit einer Nut zu versehen, wodurch sich der Durchsatz des Einschneckenextruders steigern lässt.

Ferner ist es aus der DE 101 30 759 A1 bekannt, ein Plastifiziersystem auch im Bereich einer Homogenisierzone, die mindestens zwei Scherteile und ein Mischteil aufweist, genutet auszuführen. Hierdurch kann eine Durchsatzerhöhung erzielt werden. Dadurch, dass hier das Maddock- oder Barrierescherteil drehbar in einem genuteten Zylinderabschnitt gelagert sind, ergeben sich aber auch Nachteile. In den Nuten können sich nämlich in der Rohschmelze verbliebene Restfeststoffe verhaken und so über die Stege des Scherteils treten. Dieser Effekt wird auch als statischer Drainage-Effekt oder Eiswürfel-Effekt bezeichnet. Durch das Übertreten der Restfeststoffe in die Schmelze in benachbarten Kanälen des Scherteils können die Restfeststoffe zwar einerseits gut erwärmt und gleichzeitig die umgebende Schmelze gekühlt werden, andererseits besteht aber auch die Gefahr, dass nicht aufgeschmolzene Restfeststoffe mit der Schmelze den Extruder verlassen und so die Qualität der Schmelze beeinträchtigen. Das Scherteil kann also seiner eigentlichen Aufgabe, nämlich in der Rohschmelze enthaltene Restfeststoffe zurückzuhalten und diese unter Einwirkung maßvoller Scherdeformation im Scherspalt zwischen Stegen des Scherteils und der Zylinderinnenwand zu plastifizieren, nicht gerecht werden. Scherteile können zudem in Abhängigkeit des Aufbereitungszustandes der Rohschmelze große Druckverbraucher sein.

Aufgabe der vorliegenden Erfindung ist es deshalb, einen Einschneckenextruder bereitzustellen, der eine verbesserte Aufschmelzwirkung, insbesondere eine verbesserte Restaufschmelzwirkung, bei gleichzeitig erhöhtem Durchsatz, verringerter Schmelzetemperatur und verbessertem Druckaufbauvermögen ermöglicht.

Diese Aufgabe wird durch einen Einschneckenextruder mit den Merkmalen des Anspruchs 1 gelöst.

Erfindungsgemäß wurde erkannt, dass die genannten Nachteile umgangen werden können, wenn in der Homogenisierzone des Einschneckenextruders mindestens eine in Längsrichtung verlaufende Nut in der Zylinderinnenwand vorgesehen ist, die in Förderrichtung gesehen im Bereich zwischen einem ersten und einem nachfolgenden, insbesondere dem zweiten Verfahrensteil endet. Somit ist erfindungsgemäß nicht die gesamte Homogenisierzone mit mindestens einer Nut versehen, sondern lediglich der Bereich zwischen Beginn der Homogenisierzone im Anschluss an die Aufschmelzzone und dem Bereich zwischen dem ersten und einem nachfolgenden Verfahrensteil, das als Scherelement ausgebildet ist. Die Verfahrenselemente sind hierbei in der Homogenisierzone als Schneckenelemente vorgesehen. Die Schnecke kann im Bereich der Homogenisierzone auch über mehr als zwei aufeinanderfolgende Verfahrensteile verfügen, erfindungsgemäß wichtig ist jedoch, dass genau das in Förderrichtung liegende Verfahrensteil als Scherteil ausgebildet ist, das in einem nutenfreien Bereich des Zylinders gelagert ist. So kann sichergestellt werden, dass dieses Verfahrensteil die Aufgabe eines Scherteils erfüllen kann, also insbesondere zerteilend wirken und in der Rohschmelze eventuell noch vorhandene Restfeststoffe durch Scherdeformation im Scherspalt plastifizieren kann.

Bei dieser Ausgestaltung hat es sich als vorteilhaft erwiesen, dass durch das Vorsehen mindestens einer Nut im Bereich des ersten Verfahrensteils, aufgrund des sogenannten statischen Drainageeffekts durch die Nuten, eine bessere Förderung und ein geringerer Druckverlust erfolgt. Vorhandener Restfeststoff kann sich in der oder in den Nuten verhaken, wird durch die Nuten in benachbarte Gänge des Verfahrensteils abgeleitet und dadurch und den engen Kontakt mit der beheizten Zylinderwand besonders effektiv erwärmt. Die Größe von vorhandenen Restfeststoffinseln kann so weiter reduziert werden. Durch die aufgrund der Nut bzw. Nuten erzielbare bessere Plastifizierung bzw. Erwärmung der Rohschmelze im Bereich des ersten Verfahrensteils kann die Schmelze dem nachfolgenden, insbesondere zweiten Verfahrensteil, das erfindungsgemäß als Scherteil ausgebildet ist, in einem besseren Aufbereitungszustand zugeführt werden. Besser heißt in diesem Sinne, dass verbliebene Restfeststoffinseln kleiner und besser erwärmt sind. Damit sinkt der Verformungswiderstand des Restfeststoffs und als Folge der Druckverlust im zweiten Verfahrensteil.

Dadurch, dass im Bereich des nachfolgenden Verfahrensteils keine Nut bzw. Nuten vorgesehen sind, kann hier das Scherteil voll zur Wirkung kommen, indem es dafür sorgt, dass noch enthaltene Restfeststoffe durch die Stege des Scherteils zurückgehalten werden und aufgrund von Scherdeformationen im Scherspalt, d. h. im Spalt zwischen Stegen des Scherteils und der Zylinderinnenwand, plastifiziert werden. Da hier keine Nuten in der Zylinderinnenwand sind, kann kein Restfeststoff zwischen Zylinderinnenwand und Stegen des Scherteils durchtreten, wodurch eine verbesserte Homogenisierwirkung erzielt werden kann. So lässt sich durch die erfindungsgemäße Ausgestaltung des Einschneckenextruders eine sichere Restplastifizierung eventuell noch vorhandener Restfeststoffe gewährleisten, bei gleichzeitig geringerem Druckverlust des Systems, da im Bereich des ersten Verfahrensteils die Nut bzw. die Nuten zu einer besseren Erwärmung von Restfeststoffen und einer Reduktion von verbleibenden Reststoffinseln beitragen. Somit kann durch den erfindungsgemäßen Einschneckenextruder ein System mit insgesamt geringem Druckverlust und sowohl thermisch als auch mechanisch verbesserter Homogenisierung der Schmelze bereitgestellt werden.

Gemäß einer bevorzugten Weiterbildung der vorliegenden Erfindung kann der erfindungsgemäße Einschneckenextruder im Bereich der Aufschmelzzone mindestens eine in Längsrichtung verlaufende Nut in der Zylinderinnenwand aufweisen. Auch in diesem Bereich lässt sich der bereits bekannte Effekt der verbesserten Aufschmelzung von Restfeststoff vorteilhaft nutzen. Besonders bevorzugt kann hierbei die mindestens eine Nut in der Aufschmelzzone übergangslos in die mindestens eine Nut in der Homogenisierzone übergehen. Es kann allerdings auch vorgesehen sein, dass im Bereich der Aufschmelzzone mehr oder weniger Nuten als im Bereich der Homogenisierzone vorgesehen sind.

Gemäß einer weiter bevorzugten Ausgestaltung des erfindungsgemäßen Einschneckenextruders kann auch im Bereich der Einzugszone mindestens eine in Längsrichtung verlaufende Nut in der Zylinderinnenwand vorgesehen sein. Durch das Vorsehen von Nuten in der Einzugszone lassen sich der Feststoffeinzug und die Feststoffförderung stark verbessern. Dieser Effekt lässt sich vorteilhaft mit dem verbesserten Aufschmelzverhalten in der Aufschmelzzone sowie dem besseren Homogenisierverhalten in der Homogenisierzone kombinieren. Bevorzugt kann auch die mindestens eine Nut im Bereich der Einzugszone insbesondere übergangslos in mindestens eine Nut in der Aufschmelzzone übergehen, es können aber auch hier wiederum mehr oder weniger Nuten in der Einzugszone als in der Aufschmelzzone vorgesehen sein. Besonders bevorzugt verfügen sowohl Einzugsals auch Aufschmelz- als auch Homogenisierzone über dieselbe Anzahl von Nuten, was eine besonders einfache Bereitstellung eines entsprechenden Einschneckenextruders ermöglicht. Vorteile ergeben sich hier insbesondere, wenn der Zylinder einteilig ausgeführt ist. Alternativ können die verschiedenen Zonen aber auch aus verschiedenen Zylinderabschnitten zusammengesetzt sein, die jeweils separat mit Nuten versehen werden können.

Gemäß einer besonders bevorzugten Ausgestaltung kann die mindestens eine Nut im Bereich des in Förderrichtung ersten Verfahrensteits in der Homogenisierzone wendelförmig verlaufen. Hier können verschiedene Steigungswinkel der Nut vorgesehen und insbesondere der Drehsinn der Nut entgegen dem Drehsinn einer förderwirksamen Schnecke gewählt werden. Ebenso können die Nuten in Aufschmelz- und Einzugszone, sofern vorhanden, wendelförmig ausgebildet sein.

Gemäß einer weiteren bevorzugten Ausgestaltung der vorliegenden Erfindung kann der Einschneckenextruder mehrere, über den Umfang des Zylinders beabstandete Nuten aufweisen. Dies liefert besonders günstige Ergebnisse im Hinblick auf Förderverhalten und Druckaufbau.

Gemäß einer bevorzugten Ausgestaltung der vorliegenden Erfindung kann die Tiefe und/oder die Breite der Nut bzw. der Nuten variieren. So wird bevorzugt eine Nut in Förderrichtung auslaufen, d. h. in der Tiefe abnehmen und sich im Wesentlichen an die Zylinderinnenwand anpassen. So lassen sich ungewollte Totzonen effektiv vermeiden, in denen Schmelze zurückbleibt und degradiert.

Besonders bevorzugt laufen die Nuten in der Zylinderinnenwand in der Homogenisierzone im Bereich zwischen dem ersten und einem nachfolgenden Verfahrensteil derart aus, dass ihre Tiefe im Wesentlichen auf Null zurückgeht, so dass sichergestellt werden kann, dass kein Überlapp zwischen den Nuten und den Stegen des nachfolgenden, als Scherteil ausgebildeten Verfahrensteils gegeben ist, in dem es zu dem genannten Drainageeffekt kommen könnte. Dieser soll erfindungsgemäß im Bereich des nachfolgenden Verfahrensteils vermieden werden, um die gewünschte thermische und mechanische Homogenisierung der Schmelze sicherstellen zu können. Insbesondere kann die Tiefe der Nut bzw. Nuten in der Homogenisierzone über das erste Verfahrensteil derart abnehmen, dass die Tiefe kontinuierlich auf Null zurückgeht und somit auch der Drainageeffekt über das erste Verfahrensteil abnimmt. Auch im Fall des Vorhandenseins von Nuten bereits im Bereich der Aufschmelzzone können diese in der Homogenisierzone flacher ausgebildet sein, um so den Drainageeffekt zu beeinflussen.

Gemäß einer vorteilhaften Ausgestaltung ist auch das in Förderrichtung erste Verfahrensteil in der Homogenisierzone als Scherteil ausgebildet. Hierdurch lässt sich bereits ein erstes Homogenisieren der Rohschmelze mit ggf. vorhandenen Restfeststoffen bewerkstelligen, während durch das gleichzeitige Vorhandensein der Nut bzw. Nuten der Drainageeffekt noch auftritt und Restfeststoffinseln gleichzeitig effektiv verteilt und erwärmt werden.

Besonders bevorzugt kann das in Förderrichtung erste Scherteil bei dieser Ausgestaltung einen größeren Überströmspalt aufweisen. Unter Überströmspalt wird hierbei der zwischen einem Überströmsteg des Scherteils und der Zylinderinnenwand vorhandene Spalt verstanden. Hierdurch lässt sich der Druckverlust an diesem Scherteil reduzieren, was sich positiv auf den Druckverlust über die Gesamtschnecke im erfindungsgemäßen Einschneckenextruder auswirkt. Zudem kann hierdurch im Zusammenspiel mit der Nut in der Zylinderinnenwand in diesem Bereich die Aufwärmung weiter verbessert und die Schmelze optimal mit den Restfeststoffinseln vermischt werden.

Das in Förderrichtung erste Scherteil kann erfindungsgemäß auch Stegdurchbrüche aufweisen, wodurch der Einschneckenextruder noch besser an unterschiedlichste Verfahrensaufgaben angepasst werden kann. Hierbei wird von den entsprechenden Anteilen an Restfeststoffinseln und deren Größe je nach verarbeitetem Material bei der Auslegung auszugehen sein.

Gemäß einer weiteren bevorzugten Ausgestaltung des erfindungsgemäßen Einschneckenextruders kann das in Förderrichtung erste Verfahrensteil auch als Mischteil ausgebildet sein. Hierbei wird, in Abhängigkeit von dem verarbeiteten Material, ausgenutzt, dass Mischteile eine stärker verteilende Wirkung haben, wodurch sich Feststoffreste besser in dem ansonsten in der Aufschmelzzone bereits aufgeschmolzenen Material verteilen. Ferner kann hierbei bevorzugt ein Mischteil mit Förderwirkung eingesetzt werden, wodurch sich der Druckverlust über den erfindungsgemäßen Einschneckenextruder weiter verringern lässt. So kann besonders bevorzugt ein förderwirksames Rautenmischteil als erstes Verfahrensteil in der Homogenisierzone zum Einsatz kommen, das vorteilhaft mit der bzw. den Nuten in diesem Bereich zusammenwirkt.

Die Wahl der Schwerteile sowohl für das in Förderrichtung erste als auch für das in Förderrichtung nachfolgende Verfahrensteil kann aus der Menge der Le Roy - Scherteile, Maddock-Scherteile und/oder Gregory-Scherteile erfolgen. Hierbei können diese in beliebiger Kombination zum Einsatz kommen, wobei auf die zu verarbeitenden Materialien und die entsprechenden Verfahrensaufgaben abzustellen ist. So können auch im Falle der Ausgestaltung des ersten Verfahrensteils als Mischteil im Bereich des nachfolgenden, insbesondere zweiten Verfahrensteils sämtliche genannten Scherteile alternativ zum Einsatz kommen. Ferner kann auch in Folge des in Förderrichtung zweiten Verfahrensteils ein weiteres Verfahrensteil vorgesehen sein. Dieses kann wieder als Scherteil ausgebildet sein. Besonders bevorzugt jedoch werden hier Mischteile vorgesehen, die eine optimale Durchmischung des durch das zweite Verfahrensteil in der Homogenisierzone restlos aufgeschmolzenen Materials ermöglichen und so eine Schmelze großer Homogenität sowohl im Hinblick auf Temperatur als auch Materialzusammensetzung zum Austrittsende des Einschneckenextruders liefern. Diese Mischteile können hierbei förderwirksam oder neutral sein.

Gemäß einer weiteren bevorzugten Ausgestaltung der vorliegenden Erfindung kann die Schnecke im Bereich der Aufschmelzzone als insbesondere mehrgängige, konventionelle Förderschnecke oder als Barriereschnecke oder als Polygonschnecke (ET-Schnecke oder Wave-Schnecke) ausgebildet sein. Durch die entsprechende Wahl der Schnecke im Bereich der Aufschmelzzone lässt sich sicherstellen, dass die Materialeigenschaften des zu verarbeitenden Materials optimal berücksichtigt und eine bestmögliche Aufschmelzleistung gewährleistet wird, um sodann das zu größten Teilen aufgeschmolzene Material im Bereich der Homogenisierzone durch die erfindungsgemäße Ausgestaltung des Extruders bestmöglich zu homogenisieren. Hierbei kann die Zylinderinnenwand auch im Bereich der Aufschmelzzone genutet ausgeführt sein.

Durch die vorliegende Erfindung kann so eine hervorragende Produktqualität erzielt werden. Gleichzeitig ist die Gesamtaufschmelzleistung des erfindungsgemäßen Einschneckenextruders sehr hoch, wodurch ein hoher Gesamtdurchsatz ermöglicht wird, wobei das Druckniveau im Zylinder gering gehalten wird, was zu einer Verlängerung der Lebensdauer der Bauteile des Einschneckenextruders führt. Durch die Verringerung des Druckniveaus ist die Belastung auf die einzelnen Teile sowie auf die Oberflächen sowohl der Schnecke als auch des Zylinders verringert, und Abnutzungserscheinungen treten erst nach längerem Gebrauch auf.

Eine bevorzugte Ausführungsform der vorliegenden Erfindung soll anhand der nachfolgenden Figuren noch näher beschrieben werden. Es zeigen
- Figur 1a: schematisch einen Schnitt durch die Homogenisierzone und einen Bereich der Aufschmelzzone eines erfindungsgemäßen Einschneckenextruders mit darin aufgenommener, durchbrochen dargestellter Schnecke und Nuten in der Zylinderinnenwand,
- Figur 1b: dieselbe Ansicht mit massiv dargestellter Schnecke,
- Figur 1c: denselben Zylinderabschnitt ohne darin aufgenommene Schnecke und
- Figur 2: das förderrichtungsseitige Ende einer in einem erfindungsgemäßen Extruder einsetzbaren Schnecke.

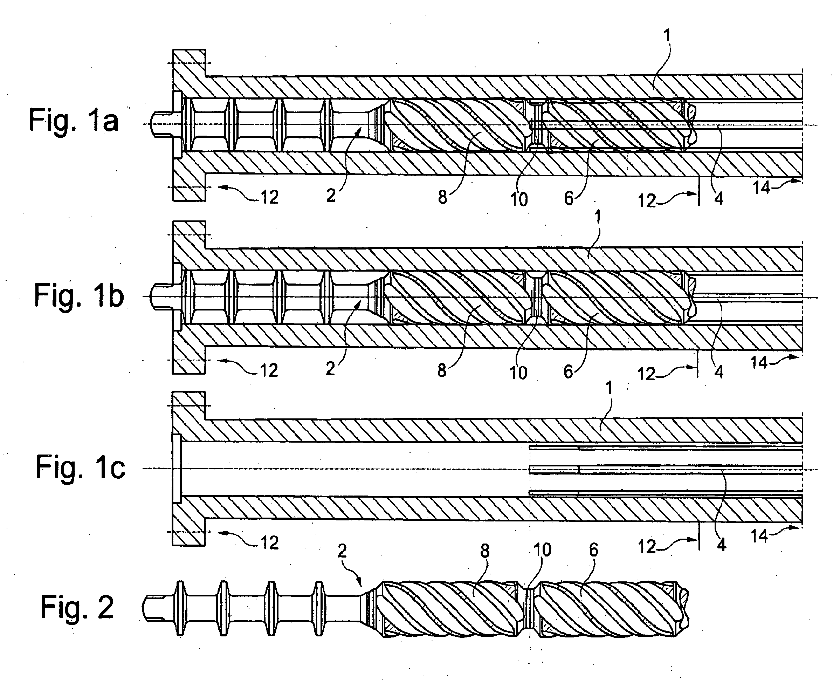

In Figur 1a ist ein Abschnitt eines Zylinders 1 eines erfindungsgemäßen Einschneckenextruders schematisch geschnitten dargestellt, wobei die Homogenisierzone 12 und ein Bereich der Aufschmelzzone 14 dargestellt sind. Im Zylinder 1 ist ein Abschnitt einer Schnecke 2 enthalten, deren förderrichtungsseitiges Ende in der Figur auf der linken Seite ist und die sich nach rechts in den Aufschmelzbereich fortsetzt, hier aber gebrochen dargestellt ist. Die Schnecke ist durchbrochen dargestellt, so dass man durch sie hindurch auf die Zylinderinnenwand sieht. Die Zylinderinnenwand ist mit Nuten 4 versehen, die in der Figur in Längsrichtung verlaufen und sich im vorliegenden Fall sowohl in einem Bereich der Homogenisierzone 12 als auch in der Aufschmelzzone 14 befinden, wobei sie sich aus dem Bereich der Homogenisierzone 12 übergangslos in die Aufschmelzzone 14 erstrecken. In der Homogenisierzone 12 enden die Nuten 4 im Bereich zwischen einem ersten Verfahrensteil 6 und einem zweiten Verfahrensteil 8. Hier sind sie abrupt endend dargestellt, können aber auch graduierlich gegen Null verlaufen, um eventuelle Totzonen für die Schmelze zu vermeiden.

Im dargestellten Ausführungsbeispiel sind die beiden aufeinander folgenden Verfahrensteile 6 und 8 in der Homogenisierzone 12 als Scherteile, hier als Wendelscherteile ausgebildet. Diese weisen verschiedene Kanäle auf, die jeweils durch Stege gebildet werden. Die beiden Verfahrensteile 6 und 8 sind durch einen Einstich 10 voneinander getrennt; genau in diesem Bereich, bevor das zweite Verfahrensteil 8 beginnt, enden erfindungsgemäß die Nuten 4 in der Innenwand des Zylinders 1. In Förderrichtung schließt sich an das zweite Verfahrensteil 8 ein Schneckenbereich an, der vorliegend, schematisch dargestellt, als Zahnscheibenmischteil ausgebildet ist.

In Figur 1b ist dieselbe Ansicht wie in Figur 1 a dargestellt, für gleiche Merkmale werden dieselben Bezugsziffern verwendet. Hier ist lediglich die Schnecke 2 nicht durchbrochen dargestellt.

In Figur 1c ist der derselbe Zylinder 1 nochmals ohne Schnecke 2 dargestellt. Hieraus ist deutlich, dass die Nuten 4 gegen den Bereich zwischen erstem und zweitem Verfahrensteil auslaufen. Dies ist nur schematisch dargestellt.

In Figur 2 ist der in Förderrichtung gesehen vordere Teilbereich der Schnecke 2 dargestellt, wie sie oben im Zusammenhang mit den Figuren 1a bis 1c bereits beschrieben wurde. Bei den schraffiert dargestellten Stegen der Verfahrensteile 6 und 8, hier als Wendelscherteile ausgebildet, handelt es sich um die sogenannten Überströmstege, die erfindungsgemäß bei dem ersten Verfahrensteil 6 niedriger ausgebildet sein können als beim zweiten Verfahrensteil 8, so dass beim ersten Scherteil ein größerer Überströmspalt, das ist der Spalt zwischen Überströmsteg und Zylinderinnenwand, gegeben ist.

Im Betrieb wird das mit dem Einschneckenextruder verarbeitete Material durch die Drehbewegung der Schnecke 2 im Zylinder 1 von rechts nach links gefördert und dabei aufgeschmolzen. Die gemäß der gezeigten Ausführungsform bereits in der Aufschmelzzone 14 vorgesehenen Nuten 4 bewirken, dass jeweils noch nicht aufgeschmolzene Restfeststoffe, die in kleinen Inseln oder Klumpen auftreten, sich in den Nuten verhaken können und aufgrund des aufgebauten Drucks über den entsprechenden Steg der Schnecke 2 treten und in einem benachbarten Schneckenkanal bzw. einer unterschiedlichen Stelle desselben Schneckenkanals landen. Da dort im Allgemeinen das Gros des Materials bereits als Schmelze vorliegt, kann der Restfeststoff durch den Kontakt mit der ihn umgebenden Schmelze besser aufgeschmolzen werden, deren Temperatur dabei leicht zurückgeht. Ebenso trägt auch der Kontakt des Restfeststoffs mit der geheizten Zylinderinnenwand während des Verweilens in der Nut weiter zum Erwärmen desselben bei. So kann durch das Vorsehen von Nuten durch eine Art statischen Drainageeffekts, der auch als Eiswürfeleffekt bezeichnet wird, das Material besser aufgeschmolzen werden, wobei die Nuten auch zusätzlich eine positive Wirkung auf die axiale Förderung des Materials im Zylinder haben. Hierdurch wird zusätzlich das Druckaufbauvermögen des entsprechenden Einschneckenextruders gestärkt.

Durch das erfindungsgemäße Vorsehen der Nuten in der Homogenisierzone 12 im Bereich des ersten Verfahrensteils 6, wobei die Nuten 4 zwischen dem ersten Verfahrensteil 6 und dem zweiten Verfahrensteil 8 enden, kann dieser Effekt auch noch im Bereich des hier als Scherteil ausgebildeten ersten Verfahrensteils 6 genutzt werden. Dies wirkt sich weiter positiv auf die Restplastifizierung von in der Rohschmelze am Ende der Aufschmelzzone 14 noch vorhandenen Restfeststoffen aus. Diese werden durch den statischen Drainageeffekt effektiv erwärmt, was durch die geringfügige Vergrößerung des Überströmspalts in diesem Bereich noch verstärkt werden kann. Da die Nuten zusätzlich förderwirksam sind, tritt über dem ersten Verfahrensteil 6 kein sehr hoher Druckverlust auf. Zudem weist das Material durch die effektivere Erwärmung eine geringere Viskosität auf, wodurch sich der Druckverlust über das nachfolgende Verfahrensteil, das als Scherteil ausgebildet ist, weiter reduziert.

Durch den Einsatz eines erfindungsgemäßen Einschneckenextruders lässt sich somit eine besonders gute thermische wie mechanische Homogenisierung der erzeugten Schmelze sicherstellen.

### Bezugszeichenliste

- 1: Zylinder
- 2: Schnecke
- 4: Nut
- 6: Erstes Verfahrensteil
- 8: Zweites Verfahrensteil
- 10: Einstich
- 12: Homogenisierzone
- 14: Aufschmelzzone

## Patentansprüche

1. Einschneckenextruder mit einem Zylinder (1), der eine Aufschmelzzone (14) und eine Homogenisierzone (12) aufweist, die sich an die Aufschmelzzone (14) anschließt, sowie einer in dem Zylinder (1) drehbar gelagerten Schnecke (2), die im Bereich der Homogenisierzone (12) über mindestens zwei aufeinanderfolgende Verfahrensteile (6, 8) verfügt, wovon das in Förderrichtung nachfolgende als Scherteil ausgebildet ist, wobei mindestens eine in Längsrichtung verlaufende Nut (4) in der Zylinderinnenwand in der Homogenisierzone (12) vorgesehen ist, die in Förderrichtung gesehen im Bereich zwischen dem ersten Verfahrensteil (6) und dem nachfolgenden Scherteil (8) endet, wobei eventuell noch vorhandene Restfeststoffe plastifiziert werden können.

2. Einschneckenextruder nach Anspruch 1,
wobei im Bereich der Aufschmelzzone (14) mindestens eine in Längsrichtung verlaufende Nut (4) in der Zylinderinnenwand vorgesehen ist.

3. Einschneckenextruder nach Anspruch 2,
wobei die mindestens eine Nut (4) im Bereich der Aufschmelzzone übergangslos in die mindestens eine Nut (4) in der Homogenisierzone (12) übergeht.

4. Einschneckenextruder nach einem der Ansprüche 1 bis 3,
wobei im Bereich der Einzugszone mindestens eine in Längsrichtung verlaufende Nut (4) in der Zylinderinnenwand vorgesehen ist.

5. Einschneckenextruder nach Anspruch 4,
wobei die mindestens eine Nut (4) im Bereich der Einzugszone übergangslos in die mindestens eine Nut (4) in der Aufschmelzzone (14) übergeht.

6. Einschneckenextruder nach einem der Ansprüche 1 bis 5,
wobei die mindestens eine Nut (4) wendelförmig verläuft.

7. Einschneckenextruder nach einem der Ansprüche 1 bis 6,
wobei mehrere, über den Umfang des Zylinders (1) beabstandete Nuten (4) vorgesehen sind.

8. Einschneckenextruder nach einem der Ansprüche 1 bis 7,
wobei die Tiefe oder die Breite der Nuten (4) oder beides variiert.

9. Einschneckenextruder nach einem der Ansprüche 1 bis 8,
wobei das in Förderrichtung erste Verfahrensteil (6) als Scherteil ausgebildet ist.

10. Einschneckenextruder nach Anspruch 9,
wobei das in Förderrichtung erste Scherteil einen größeren Überströmspalt aufweist.

11. Einschneckenextruder nach Anspruch 9 oder 10,
wobei das in Förderrichtung erste Scherteil Stegdurchbrüche aufweist.

12. Einschneckenextruder nach einem der Ansprüche 1 bis 8,
wobei das in Förderrichtung erste Verfahrensteil (6) als Mischteil ausgebildet ist

13. Einschneckenextruder nach einem der Ansprüche 1 bis 12,
wobei als Scherteile ein oder mehrere aus Le Roy-Scherteil, Maddock-Scherteil und Gregory-Scherteil in beliebiger Kombination vorgesehen sind.

14. Einschneckenextruder nach einem der Ansprüche 1 bis 13,
wobei die Schnecke (2) im Bereich der Aufschmelzzone (14) als mehrgängige konventionelle Förderschnecke, als Barriereschnecke oder als Polygonschnecke ausgebildet ist.

## Claims

1. A single-screw extruder comprising a cylinder (1), which comprises a transition zone (14), and a homogenizing zone (12) that adjoins the transition zone (14), and a screw (2) which is rotatably supported in the cylinder (1) and which has at least two consecutive displacement parts (6, 8) in the region of the homogenizing zone (12), the subsequent displacement part of which in the conveying direction is designed as a shearing part, wherein at least one groove (4) running in the longitudinal direction in the cylinder inner wall is provided in the homogenizing zone (12), and said groove ends in the area, viewed in the conveying direction, between the first displacement part (6) and the subsequent shearing part (8), wherein any residual solids which are still present can be plasticized.

2. The single-screw extruder according to Claim 1,
wherein in the region of the transition zone (14) at least one groove (4) running in the longitudinal direction is provided in the cylinder inner wall.

3. The single-screw extruder according to Claim 2,
wherein the at least one groove (4) in the region of the transition zone continues in a transition-free manner into the at least one groove (4) in the homogenizing zone (12).

4. The single-screw extruder according to one of Claims 1 to 3,
wherein in the region of the infeed zone at least one groove (4) running in the longitudinal direction is provided in the cylinder inner wall.

5. The single-screw extruder according to Claim 4,
wherein the at least one groove (4) in the region of the infeed zone continues in a transition-free manner into the at least one groove (4) in the transition zone (14).

6. The single-screw extruder according to one of Claims 1 to 5,
wherein the at least one groove (4) runs in a spiral shape.

7. The single-screw extruder according to one of Claims 1 to 6,
wherein a plurality of grooves (4) are provided, spaced over the circumference of the cylinder (1).

8. The single-screw extruder according to one of Claims 1 to 7,
wherein the depth or the width of the grooves (4), or both, varies.

9. The single-screw extruder according to one of Claims 1 to 8,
wherein the first displacement part (6) in the conveying direction is designed as a shearing part.

10. The single-screw extruder according to Claim 9,
wherein the first shearing part in the conveying direction has a greater overflow gap.

11. The single-screw extruder according to Claim 9 or 10,
wherein the first shearing part in the conveying direction has web apertures.

12. The single-screw extruder according to one of Claims 1 to 8,
wherein the first displacement part (6) in the conveying direction is designed as a mixing part.

13. The single-screw extruder according to one of Claims 1 to 12,
wherein as shearing parts one or more of Le Roy shearing part, Maddock shearing part and Gregory shearing part are provided in any desired combination.

14. The single-screw extruder according to one of Claims 1 to 13,
wherein the screw (2) in the region of the transition zone (14) is designed as a multiple-thread conventional conveying screw, as a barrier screw or as a polygonal screw.

## Revendications

1. Extrudeuse mono-vis comprenant un cylindre (1) qui présente une zone de fusion (14) et une zone d'homogénéisation (12) qui se raccorde à la zone de fusion (14), ainsi qu'une vis sans fin (2) positionnée rotative dans le cylindre (1) qui dispose d'au moins deux parties de procédé (6, 8) successives au niveau de la zone d'homogénéisation (12) dont celle qui suit dans le sens de transport est conçue en tant que partie de cisaillement, sachant qu'au moins une rainure (4) longitudinale est prévue dans la paroi intérieure du cylindre dans la zone d'homogénéisation (12), qui, vue dans le sens de transport, termine au niveau entre la première partie de procédé (6) et la partie de cisaillement (8) suivante, sachant qu'éventuellement, des matières solides encore présentes peuvent être plastifiées.

2. Extrudeuse mono-vis selon la revendication 1,
dans laquelle au moins une rainure (4) longitudinale est prévue dans la paroi intérieure du cylindre au niveau de la zone de fusion (14).

3. Extrudeuse mono-vis selon la revendication 2,
dans laquelle l'au moins une rainure (4) au niveau de la zone de fusion se poursuit sans transition dans l'au moins une rainure (4) dans la zone d'homogénéisation (12).

4. Extrudeuse mono-vis selon l'une des revendications 1 à 3,
dans laquelle au moins une rainure (4) longitudinale est prévue dans la paroi intérieure du cylindre au niveau de la zone d'entrée.

5. Extrudeuse mono-vis selon la revendication 4,
dans laquelle l'au moins une rainure (4) au niveau de la zone d'entrée se poursuit sans transition dans l'au moins une rainure (4) dans la zone de fusion (14).

6. Extrudeuse mono-vis selon l'une des revendications 1 à 5,
dans laquelle l'au moins une rainure (4) est hélicoïdale.

7. Extrudeuse mono-vis selon l'une des revendications 1 à 6,
dans laquelle plusieurs rainures (4) espacées sur le pourtour du cylindre (1) sont prévues.

8. Extrudeuse mono-vis selon l'une des revendications 1 à 7,
dans laquelle la profondeur ou la largeur des rainures (4) ou les deux varient.

9. Extrudeuse mono-vis selon l'une des revendications 1 à 8,
dans laquelle la première partie de procédé (6) dans le sens de transport est conçue en tant que partie de cisaillement.

10. Extrudeuse mono-vis selon la revendication 9,
dans laquelle la première partie de cisaillement dans le sens de transport présente une fente de trop-plein plus grande.

11. Extrudeuse mono-vis selon la revendication 9 ou 10,
dans laquelle la première partie de cisaillement dans le sens de transport présente des percées d'âme.

12. Extrudeuse mono-vis selon l'une des revendications 1 à 8,
dans laquelle la première partie de procédé (6) dans le sens de transport est conçue en tant que partie de mélange.

13. Extrudeuse mono-vis selon l'une des revendications 1 à 12,
dans laquelle une ou plusieurs d'une partie de cisaillement Le Roy, partie de cisaillement Maddock et partie de cisaillement Gregory sont prévues dans toute combinaison au choix en tant que parties de cisaillement.

14. Extrudeuse mono-vis selon l'une des revendications 1 à 13,
dans laquelle la vis sans fin (2) est conçue en tant que vis sans fin à pas multiples conventionnelle, en tant que vis sans fin barrière ou vis sans fin polygonale au niveau de la zone de fusion (14).
